# EUROPÄISCHE PATENTSCHRIFT

(11) **EP 3 786 709 B1**
(45) Veröffentlichungstag und Bekanntmachung des Hinweises auf die Patenterteilung: **02.04.2025**
(21) Anmeldenummer: 20192916.3
(22) Anmeldetag: 26.08.2020
(51) Int. Cl.: G03B 37/00, G01N 21/88

(54) **KANALKAMERA**
CHANNEL CAMERA
CAMÉRA POUR ÉGOUTS

(30) Priorität: 26.08.2019 CH 10642019
(43) Veröffentlichungstag der Anmeldung: 03.03.2021
(73) Patentinhaber: Elsener, Erwin, 8722 Kaltbrunn (CH)
(72) Erfinder: Elsener, Erwin, 8722 Kaltbrunn (CH)
(74) Vertreter: Swisspat Riederer Hasler Patentanwälte AG

(56) Entgegenhaltungen:
- DE-U1- 202011 100 462
- DE-U1- 202018 103 145
- US-A- 4 363 545
- US-A1- 2012 297 882

## Beschreibung

### TECHNISCHES GEBIET DER ERFINDUNG

Die Erfindung betrifft eine Kanalkamera gemäss Oberbegriff des Anspruchs 1.

### HINTERGRUND DER ERFINDUNG

Die Arbeit in Kanalrohren spielt sich unabhängig von der Tageszeit stets in der Dunkelheit ab. Oftmals werden die Maschinen von der Oberfläche aus bedient, so dass kein Mensch sich in den Kanal begeben muss. Immer wieder lässt die Grösse eines Kanals auch die Aufnahme eines Menschen gar nicht zu und die Maschinen müssen gezwungenermassen vom Benutzer ferngesteuert werden. In einer solchen Situation hilft eine Kamera am Werkzeug die zu bearbeitende Stelle dem Benutzer auf einem Monitor anzuzeigen. Bei der Arbeit in Kanalrohren sind die Werkzeuge stets diversen Verschmutzungen wie auch Spänen ausgesetzt. Diese können im Blickwinkel der Kamera zu liegen kommen, womit die Sicht der Kamera eingeschränkt wird.

Da in Kanalrohren eine hohe Luftfeuchtigkeit herrscht und gelegentlich auch Wasser oder Abfluss durchgespült werden kann, ist es von grosser Wichtigkeit, dass die Kamera nicht mit Wasser und Wasserdampf in Kontakt kommt. Wasserdampf kann auch zur Trübung der Kameralinse führen, wodurch diese zuerst gereinigt werden müsste.

In US 4 363 545 A ist eine Apparatur für die photographische Inspektion des Innern eines Rohres gezeigt. Die Apparatur weist ein optisches Mittel auf, welches hinter einem kreisförmigen Glasfenster angeordnet ist. Des Weiteren ist eine Reinigungsvorrichtung auf dem Glasfenster in Form eines Wischers angebracht. Der Wischer ist an einem Support angebracht, welcher bei Aktivierung den Wischer hin und her schwenkt und dadurch die Reinigung des Glasfensters auslöst. Der Support des Wischers steht mit einem Rad in Verbindung, welches beim Bewegen der Apparatur in einer Röhre sich dreht. Durch die Drehbewegung des Rades wird der Support aktiviert.

DE 20 2018 103145 U1 offenbart eine Vorrichtung zur Rohrinspektion mit einer Reinigungseinrichtung mit einer Düse zur oberflächlichen Reinigung des Sichtfensters einer Kamera. Der Grundgedanke dieser Vorrichtung ist, mittels einer Düse zur oberflächlichen Reinigung des Sichtfensters mittels eines Gases einen sich über dem Sichtfenster ausbildenden Druckluftschild zu schaffen, der einen Kontakt des Sichtfensters mit Partikeln verhindert bzw. derartige Partikel mittels der auf das Sichtfenster wirkenden Druckluft sehr schnell abtransportiert. Die Vorrichtung weist einen feststehenden Gehäuseabschnitt und einen drehbaren Gehäuseabschnitt auf. Im drehbaren Gehäuseabschnitt ist eine Kamera hinter einem Sichtfenster angeordnet, welche sich mit dem Gehäuseabschnitt mitdreht. Am feststehenden Gehäuseabschnitt ist eine Wischlippe angeordnet. Bei Drehung des drehbaren Gehäuseabschnitts überstreicht die Wischlippe das Sichtfenster der Kamera, wobei die Wischlappe für die Reinigung einer Mehrzahl von neben dem Sichtfenster angeordneten Beleuchtungseinrichtungen vorgesehen ist.

### AUFGABE

Es ist eine Aufgabe der vorliegenden Erfindung, eine Vorrichtung vorzuschlagen, welche einer Kamera eine stetig uneingeschränkte Sicht zur Beobachtung von Sanierungsarbeiten in Kanalrohren gewährleistet.

### BESCHREIBUNG

Die Aufgabe wird gelöst von einer Kameraeinheit mit den Merkmalen des Patentanspruchs 1. Weiterbildungen und/oder vorteilhafte Ausführungsvarianten sind Gegenstand der abhängigen Patentansprüche.

Die Erfindung betrifft eine Kameraeinheit zum Beobachten von Sanierungsarbeiten in Kanalrohren mit einer Kamera, einem vorzugsweise flüssigkeitsdichten Gehäuse, in welchem die Kamera platziert ist, einem im Gehäuse vorgesehenen Fenster, hinter welchem die Kamera angeordnet ist, einem vor dem Fenster angeordneten Wischer zum Abstreifen von Verschmutzungen und einem ersten Antrieb für den Wischer. Der Vorteil einer erfindungsgemässen Kameraeinheit ergibt sich dadurch, dass der Wischer unbeweglich an einem Support angeordnet ist und der Support durch den Antrieb hin und her bewegbar ist.

Beim Sanieren von Kanalrohren treten unterschiedliche Verschmutzungen auf, welche sich auch auf dem Fenster der Kameraeinheit absetzen können. Das Aufnehmen von Bildern beim Sanieren mit der Kamera ist lediglich dann möglich, wenn das Fenster eine Sauberkeit aufweist, die dessen Durchsicht erlaubt. Auf dem Fenster anfallende Verschmutzungen müssen während der Sanierung entfernt werden. Dies wird durch einen auf dem Fenster aufliegenden Wischer ermöglicht. Durch die Bewegung des Wischers werden die Verschmutzungen auf dem Fenster aus dem Sichtfeld der Kamera entfernt.

In einer weiteren Ausführungsform der Erfindung weist die Kameraeinheit eine Wasserdüse auf, welche das zur Kameraeinheit geführte Wasser auf das Fenster spritzt. Das auf das Fenster geförderte Wasser hilft bei der Reinigung des Fensters durch den Wischer. Durch die Verwendung einer Düse wird das Wasser mit einer grösseren Geschwindigkeit auf das Fenster gefördert, was wiederum das Entfernen von Verschmutzungen erleichtert.

In einer weiteren bevorzugten Ausführungsform ist das Gehäuse zylinderförmig und das Fenster an der Mantelfläche angeordnet. Das Anordnen des Fensters an der Mantelfläche erfordert durch dessen Biegung eine Anpassung seiner Form an die Krümmung der Mantelfläche. Somit weist das Fenster die gleiche Krümmung auf wie die Mantelfläche des zylinderförmigen Gehäuses. Durch das Krümmen entsteht auf der Fensterfläche keine zusätzliche Kante. Das Vorbeugen von zusätzlichen Kanten auf der Fensterfläche verhindert das starke Brechen der Lichtstrahlen, welche in das Innere des Gehäuses fallen. Da die Lichtstrahlen nicht mehr als üblich gebrochen werden, wird das durch die Kamera aufzunehmende Bild auch nicht verzerrt.

Der Support umfasst vorteilhafterweise eine Scheibe. Der Wischer muss eine Rotation durchführen, wenn das Fenster an einer zylindrischen Mantelfläche angeordnet ist. In einer solchen Situation eignet sich für den Support die Form einer Scheibe am besten.

Bevorzugt ist der Wischer senkrecht zum Support angeordnet. Damit erreicht der Wischer bei seiner Bewegung die grösstmögliche Flächenabdeckung.

In einer weiteren bevorzugten Ausführungsform umschliesst das Fenster das zylindrische Gehäuse in dessen Umfangsrichtung. Damit ergibt sich eine durchgehende Glasscheibe in Umfangsrichtung des Gehäuses. Dies ermöglicht es dem Wischer sich nur in eine Richtung zu bewegen und dabei stets auf der Glasscheibe aufzuliegen. Der Wischer braucht dadurch nur in eine Richtung angetrieben zu werden, was wiederum zu einem einfacheren Aufbau und einer höheren Zuverlässigkeit des Antriebes führt.

Die Scheibe weist vorzugsweise die gleiche Achse wie das zylindrische Gehäuse auf und ist drehbar gelagert. Mit der gleichen Achse des zylindrischen Gehäuses und der Scheibe wird eine kompakte Bauweise ermöglicht. Der Durchmesser der Scheibe kann derjenigen des zylindrischen Gehäuses angepasst werden.

Bevorzugt ist die Zylinderachse des Gehäuses horizontal ausgerichtet. Die horizontale Ausrichtung des zylindrischen Gehäuses sorgt für eine minimale Höhe der Kameraeinheit. Dies führt zu einer kompakten Bauweise und zugleich auch zu einer höheren Kippsicherheit der Kameraeinheit.

In einer weiteren bevorzugten Ausführungsform bewegt sich der Support in paralleler Richtung zu einer Kante des Fensters. Der Wischer, welcher am Support angebracht ist, bewegt sich somit stets in einem bestimmten Winkel zum Fenster.

Vorteilhafterweise erstreckt sich der Wischer von einer Kante bis zur gegenüberliegenden Kante des Fensters. Bei einer Bewegung des Wischers deckt dieser damit die ganze Fläche des Fensters ab.

Der Support wird bevorzugt von einem ersten Elektromotor angetrieben. Die Verwendung des Elektromotors bringt den Vorteil mit sich, dass kein Treibstoff auf der Kameraeinheit mitgetragen werden muss, wodurch die Sicherheit bei der Verwendung in Sanierungsarbeiten erhöht wird. Zugleich erlaubt die Verwendung eines Elektromotors eine sehr genaue Steuerung des Antriebszeitpunktes. Dies ist nicht zuletzt auf die Entfaltung eines sehr grossen Drehmoments schon bereits bei tiefen Drehzahlen zurückzuführen.

In einer weiteren bevorzugten Ausführungsform ist ein erstes Zahnrad am Support angebracht, welches von einer ersten Kette angetrieben wird. Die Übertragung des Antriebs mit Hilfe einer Kette stellt eine kostengünstige Lösung dar.

Vorteilhafterweise treibt der erste Elektromotor die erste Kette über ein erstes Ritzel an. Der Antrieb über eine Kette und ein Ritzel wird durch die Rotation des Ritzels ausgelöst.

Dieses kann in beide Richtungen gedreht werden und entsprechend den Antrieb der daran angebrachten Kette in beide Richtungen gewährleisten.

Ein zweiter Antrieb kann eine Drehbewegung der Kamera erzeugen. Dies erlaubt das Schwenken der Kamera um eine Rotationsachse und dadurch die Vergrösserung des Sichtfelds ohne die ganze Kameraeinheit bewegen zu müssen. Durch die Verwendung eines zweiten Antriebs kann die Drehbewegung der Kamera unabhängig von der Bewegung des Wischers durchgeführt werden. Die Bewegung des Wischers ist somit von der Drehbewegung der Kamera entkoppelt.

In einer weiteren bevorzugten Ausführungsform umfasst der Antrieb für die Drehbewegung der Kamera einen zweiten Elektromotor, eine zweite Kette und ein zweites Ritzel. Dadurch weist die Kameraeinheit für die Bewegung der Kamera und derjenigen des Wischers die gleichen Bauteile auf. Dies erlaubt die Herstellungskosten aufgrund der grösseren Anzahl gleicher Bauteile tief zu halten. Gleichzeitig bietet die Verwendung eines zweiten Elektromotors die Möglichkeit, vom für den ersten Elektromotor zur Kameraeinheit geführten Strom Gebrauch zu machen.

Da die Kamera bei der Aufzeichnung von Bildern empfindlich auf Wasser oder Wassertropfen vor ihrer Linse reagiert, sollte das zylindrische Gehäuse zusammen mit der Glaswand flüssigkeitsdicht sein. Eine flüssigkeitsdichte Verbindung zwischen den Bauteilen wird am besten dadurch erzielt, wenn die Glaswand und das zylindrische Gehäuse vorteilhafterweise mit der Kamera mitrotieren.

Das zylindrische Gehäuse umfasst bevorzugt eine Glaswand, zwei Abdeckungen und eine Kamera. Durch das Zusammenfassen dieser Bauteile in ein Element ergibt sich die Form der Glaswand als Mantelfläche und diejenige der zwei Abdeckungen als Deckelflächen eines Zylinders. Dies entspricht der Bauweise, welche den kleinsten Platzbedarf aufweist.

Die Kamera rotiert vorzugsweise um die Zylinderachse. Dies bedingt, dass die Drehachse der Kamera die Zylinderachse ist und somit um die gleiche Achse rotiert wie das zylindrische Gehäuse. Dies ermöglicht mit nur einem Antrieb sowohl die Kamera als auch das zylindrische Gehäuse zu rotieren.

In einer weiteren bevorzugten Ausführungsform sind die erste und die zweite Kette parallel zueinander angeordnet. Dadurch kann eine Unterteilung zwischen dem antrieberzeugenden und dem angetriebenen Bereich vorgenommen werden. Des Weiteren ist die Kette bevorzugt aus Edelstahl oder Kunststoff gefertigt. Damit wird eine sichere und unterhaltsleichte Bauweise realisiert, da unter anderem der Schmutz in der Kette durch die Zahnräder beseitigt werden kann.

Vorteilhafterweise sind die erste und die zweite Kette auf gegenüberliegenden Seiten des zylindrischen Gehäuses angebracht. Dies führt zu einer symmetrischen Bauweise der Kameraeinheit mit den Kettenantrieben. Die symmetrische Bauweise wiederum ermöglicht eine grössere Anzahl gleicher Bauteile zu verwenden, was sowohl die Herstellung als auch den Unterhalt erleichtert.

In einer weiteren bevorzugten Ausführungsform weist die Kamera eine oder mehrere in Richtung der Linse gerichtete Lichtquellen auf. Damit wird stets das Sichtfeld der Kamera beleuchtet. Dies ist unter anderem von grosser Bedeutung, da die Kameraeinheit mehrheitlich in geschlossenen Räumen oder Kanälen zum Einsatz kommt.

Am Support können mehr als ein Wischer, insbesondere zwei, drei oder vier Wischer, angebracht sein. Eine höhere Anzahl an Wischer verbessert allgemein die Reinigungsleistung, indem zum Beispiel bei zwei Wischern die Glasfläche innerhalb der gleichen Zeit von zwei Wischern bearbeitet wird. Die Konstruktion stellt der Anzahl an Wischern keine Grenzen. Jedoch müssen für die Bewegung der Wischer deren Reibkraft überwunden werden, welche mit zunehmender Anzahl an Wischern zunimmt und somit ab einer Anzahl an Wischern keinen Nutzen bezüglich der Reinigungsleistung mehr liefert.

Die Kameraeinheit kann an einem Werkzeug angebracht sein, welches für die Sanierung von Kanalrohren verwendet wird. Die Kameraeinheit braucht weniger Raum, wenn sie direkt am Werkzeug angebracht ist. Gleichzeitig wird die Bedienung der beiden Geräte erleichtert, da sowohl das Werkzeug als auch die Kameraeinheit nicht separat in ein Kanalrohr gefördert werden müssen. Das Anbringen der Kameraeinheit an einem Werkzeug führt ebenfalls zu einer stabileren Position der Kameraeinheit während den Sanierungsarbeiten, was wiederum auf die Bildqualität der Kameraaufnahmen einen positiven Einfluss hat.

Genannte optionale Merkmale können in beliebiger Kombination verwirklicht werden, soweit sie sich nicht gegenseitig ausschliessen. Insbesondere dort wo bevorzugte Bereiche angegeben sind, ergeben sich weitere bevorzugte Bereiche aus Kombinationen der in den Bereichen genannten Minima und Maxima.

Weitere Vorteile und Merkmale der Erfindung ergeben sich aus der nachfolgenden Beschreibung von Ausführungsbeispielen der Erfindung unter Bezugnahme auf schematische Darstellungen.

### KURZBESCHREIBUNG DER FIGUREN

Ausführungsbeispiele der Erfindung werden nachfolgend anhand der Figuren beispielhaft beschrieben. Es zeigen in nicht massstabsgetreuer, schematischer Darstellung:
- Figur 1:: eine 3D-Ansicht einer erfindungsgemässen Kameraeinheit auf einer Grundplatte montiert;
- Figur 2:: ein Querschnitt durch das zylindrische Gehäuse mit der Kamera und zwei angebrachten Wischern;
- Figur 3:: eine weitere 3-D Ansicht einer erfindungsgemässen Vorrichtung mit einer teilweise transparenten Wand des Antriebsgehäuses;
- Figur 4:: ein horizontaler Schnitt durch das Antriebsgehäuse;
- Figur 5:: Ein reales Abbild einer erfindungsgemässen Kameraeinheit mit einem montierten und geführten Kabel und
- Figur 6;: eine 3-D Darstellung einer erfindungsgemässen Kameraeinheit von hinten.

### DETAILIERTE BESCHREIBUNG DER FIGUREN

Im Folgenden stehen gleiche Bezugsziffern für gleiche oder funktionsgleiche Elemente (in unterschiedlichen Figuren). Ein zusätzlicher Apostroph kann zur Unterscheidung gleichartiger bzw. funktionsgleicher oder funktionsähnlicher Elemente in einer weiteren Ausführung dienen.

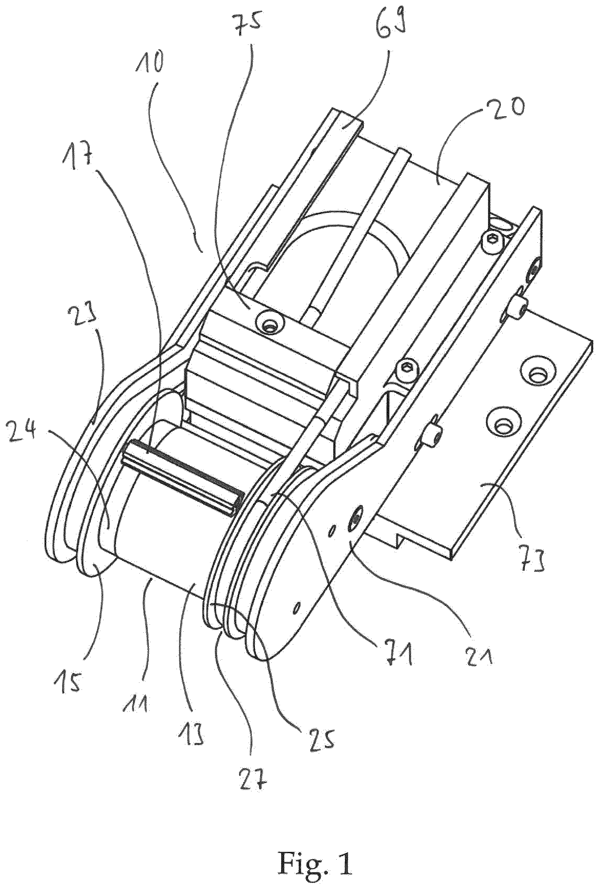

In Figur 1 ist eine bevorzugte Ausführungsform der beanspruchten Kameraeinheit 10 gezeigt. Das Gehäuse 11, in welchem die Kamera 19 platziert ist, ist zylindrisch geformt und weist eine horizontale Achse 14 auf.

Das Gehäuse 11 umfasst ein Fenster 13, welches sich im Ausführungsbeispiel über die Mantelfläche des Gehäuses erstreckt. Das Fenster 13 umfasst somit eine zylindrische Glaswand 13', deren beide Öffnungen jeweils durch eine scheibenförmige Abdeckung 24,25 geschlossen sind. Die Glaswand besteht bevorzugt aus Saphirglas, weil es dadurch kratzfest wird. Auf der zylindrischen Glaswand liegt ein Wischer 17 auf, welcher parallel zur Zylinderachse 14 gerichtet ist. Der Wischer 17 ist mittels einer starren Verbindung an einer Scheibe 15 angebracht, so dass eine Schwenkbewegung des Wischers ausgeschlossen ist. Die Mittelachse der Scheibe 15 wird durch die Zylinderachse 14 des Gehäuses 11 gebildet. Zwischen der Scheibe 15 und der Glaswand 13' ist die Abdeckung 24 angeordnet, welche die Öffnung der zylindrischen Glaswand 13' auf dieser Seite dicht verschliesst. Die Scheibe 15 überragt in der radialen Richtung das zylindrische Gehäuse 11. An der das Gehäuse 11 überragenden Stelle der Scheibe 15 ist der Wischer 17 angebracht. Auf der gegenüberliegenden Seite der zylindrischen Glaswand 13' ist ein weiterer Wischer 18 an der Scheibe angebracht. Die Scheibe 15 dient dem Wischer 17 als Support 15 und stellt gleichzeitig die in dieser Ausführung bevorzugte Form des Supports 15 dar.

Auf der von der Scheibe 15 und der Abdeckung 24 gegenüberliegenden Seite der Glaswand 13' ist eine weitere, runde Abdeckung 25 für die andere Öffnung der zylindrischen Glaswand 13' angeordnet. Diese Abdeckung 25 besitzt ebenfalls die gleiche Achse wie das zylindrische Gehäuse 11. Auf ihrer äusseren Randfläche weist die Scheibe 25 eine durchgehende Kerbe 27 auf. Die tiefe der Kerbe 27 ist etwa gleich gross wie die Breite der Scheibe 25. Diese Kerbe 27 dient der Führung des Kabels (nicht gezeigt), welches die Daten der Kamera 19 überträgt.

Das Gehäuse 11 ist an zwei Seitenblechen 21,23 mit Hilfe von zwei Wellen 29,31 (in Figur 1 nicht gezeigt) angeordnet. Jede Welle 29,31 stellt die Verbindung von jeweils einem Seitenblech 21,23 zum zylindrische Gehäuse 11 her. Gleichzeitig stellen die Seitenbleche 21,23 den Kontakt zur Grundplatte 73 her, auf der die Kameraeinheit 11 zu liegen kommt. Die Seitenbleche 21,23 dienen dabei dem zylindrischen Gehäuse 11 als Stützen.

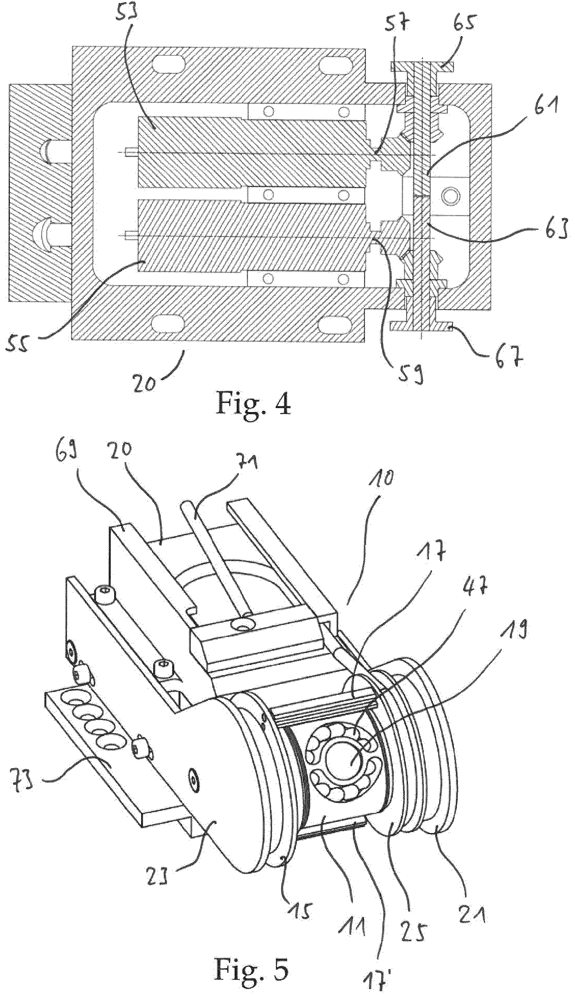

Dies ermöglicht, dass das Gehäuse 11 um die Zylinderachse 14 frei drehbar gelagert ist. Die Seitenbleche verlaufen in Kontakt mit der Grundplatte 73 stehend weiter in senkrechter Richtung zur Zylinderachse 14 des Gehäuses, so dass die Länge der Seitenbleche 21,23 grösser ist als der Abstand zwischen ihnen. Die Seiten, an welche die Seitenbleche 21,23 angeordnet sind, definieren somit die Längsseiten der Kameraeinheit 10. Während das Gehäuse 11 an einem Ende der Seitenbleche angeordnet ist, ist am anderen Ende zwischen den Seitenblechen ein weiteres Bauteil, das Antriebsgehäuse 20, angebracht. Die darin enthaltenen Gegenstände sind in Figur 4 gezeigt und werden weiter unten im Detail beschrieben.

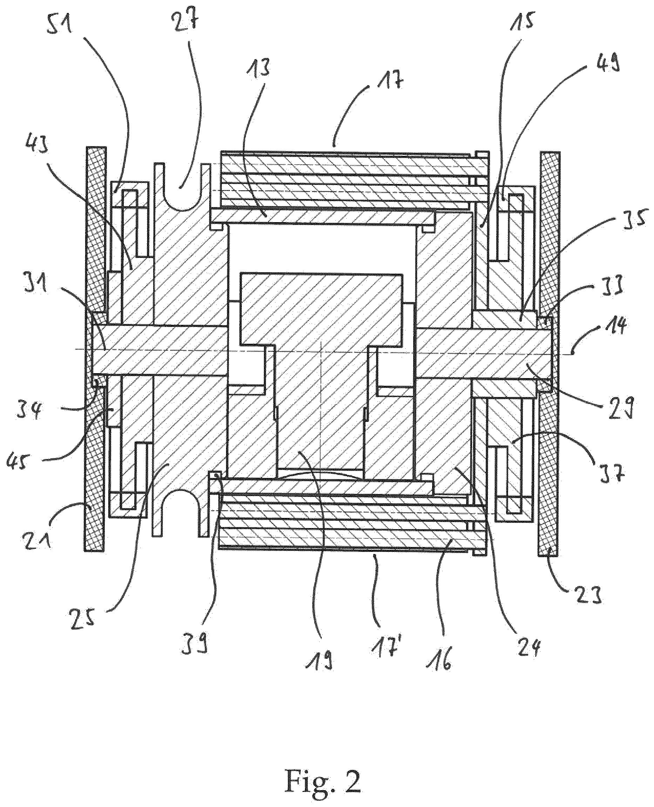

In Figur 2 ist ein Schnitt durch das zylindrische Gehäuse 11 dargestellt. Da der Schnitt nicht vertikal durch das ganze Bauteil gelegt ist, überragen die Seitenbleche 21,23 das zylindrische Gehäuse 11 nicht in der radialen Richtung. Das zylindrische Gehäuse 11 ist an zwei Wellen 29,31 angeordnet, welche wiederum an jeweils einem Seitenblech 21,23 mit Hilfe eines Lagers 33,34 angebracht sind. Beide Wellen drehen mit der Kamera 19 synchron mit. Die Scheibe 15 mit dem Wischer 17 ist über ein zusätzliches Lager 35 auf einer ersten Welle 29 gelagert. Dadurch kann sich die Scheibe 15 unabhängig von der Kamera 19 drehen. Auf dem gleichen Lager 35 ist ebenfalls ein Zahnrad 37 neben der Scheibe 15 angeordnet. Dieses weist auch als Mittelachse die Zylinderachse 14 auf und hat einen kleineren Durchmesser als die Scheibe 15. Das Zahnrad weist eine Kette 49 an seinem äusseren Radius auf, womit es angetrieben werden kann. Aufgrund der starren Verbindung zwischen dem Zahnrad 37 und der Scheibe 15 mit den Wischern rotieren diese Komponenten jederzeit zeitgleich. Die Scheibe 15 weist jeweils zwei Löcher im unterschiedlichen Abstand zur Zylinderachse 14 auf. Jedoch befinden sich beide Löcher in den die Glaswand 13' in radialer Richtung überragenden Bereich der Scheibe 15. In diesen zwei runden Löchern sind jeweils zwei Stangen 16 angebracht, die senkrecht zur Ebene der Scheibe 15 und auf der zur Kamera 19 gerichteten Seite der Schiebe 15 zu stehen kommen. Auf diesen Stangen 16 ist der Wischer 17 übergezogen, so dass er beide Stangen vollständig umschliesst. Zur Glaswand hin breitet sich der Wischer 17 so weit aus, dass sich gerade noch ein Kontakt mit der Glaswand 13' herstellt.

Die Glaswand 13' befindet sich zwischen zwei scheibenförmigen Abdeckungen 24, 25. Jedoch ragen diese teilweise in die Glaswand hinein, wodurch die Glaswand 13' auf den Abdeckungen 24, 25 zu liegen kommt. Im Bereich des in die Glaswand 13' ragenden Abschnitts der Abdeckungen 24, 25 ist jeweils eine Aussparung in Umfangsrichtung angebracht. In diese Aussparungen werden O-Ringe 39 gelegt, welche für eine vollständig dichte Abdeckung des Innern der Glaswand sorgen.

Die Abdeckung 24, welche auf jener Seite angebracht ist, wo sich die Scheibe 15 mit dem Wischer befindet, weist einen Durchmesser auf, der kleiner ist als derjenige der Glaswand 13'. Dadurch wird das Erreichen der Glaswand 13' für die an der Scheibe 15 angebrachten Wischer 17 ermöglicht.

Die Abdeckung 25 mit der Kerbe ist auf einer zweiten Welle 31 angebracht. Diese Welle 31 ist am Seitenblech 21 mit Hilfe eines Lagers 34 gelagert. Das andere Ende der Welle ragt bis zur Kamera 19 und bildet mit der auf ihr angebrachten Abdeckung 25 einen flächenbündigen Abschluss. Angetrieben wird die Welle 31 durch ein an ihr angebrachtes Zahnrad 43. Dieses wiederum ist zwischen dem Seitenblech 21 und der Abdeckung 25 mit der Kerbe platziert. Zwischen dem Zahnrad 43 und dem Seitenblech 21 ist eine zusätzliche Scheibe 45 angebracht ist, welche den Schlupf der an dieser Welle 31 angebrachten Bauteile und deren translatorische Bewegung verhindert.

Die beiden Abdeckungen 24, 25 der Glaswand werden mithilfe je einer Schraube (hier nicht gezeigt) mit der Kamera 19 befestigt. Mit Hilfe dieser Schraubenverbindungen werden die Abdeckungen 24, 25 auch auf die Glaswand 13' gedrückt, um eine Presspassung zwischen den Abdeckungen 24, 25 und der Glaswand 13' hervorzubringen, wodurch die Glaswand 13' mit den Abdeckungen 24, 25 jeweils mitrotiert. Da die Abdeckung 25 eine feste Verbindung mit der Welle 31 aufweist, führt die Kamera 19 jederzeit die gleiche Drehbewegung wie die Abdeckung 25 und die Welle 31 durch.

Damit entstehen zwei voneinander unabhängige Rotationen. Zum einen rotiert das zylindrische Gehäuse 11, welches durch die Glaswand 13 und den scheibenförmigen Abdeckungen 24,25 gebildet ist und die Kamera 19 enthält, um die Zylinderachse 14. Zum anderen wird die Scheibe 15, an welchem mindestens ein Wischer 17 angebracht ist, unabhängig von der ersten Drehbewegung ebenfalls um die gleiche Achse rotiert. Die zwei an den Wellen 29,31 angebrachten Zahnräder 37,43 sind jeweils für die Erzeugung einer dieser beiden oben erwähnten Drehbewegungen zuständig. Die erste Drehbewegung kommt durch Rotieren der ersten 29 und zweiten Welle 31 zustande. Diese sind jeweils an den Seitenblechen 21,23 über ein erstes 33 und zweites Lager 34 angebracht. Die zweite Drehbewegung kommt durch das Antreiben des Zahnrads zustande. Das Lager 35 auf der ersten Welle 29 ermöglicht die Bauteile, welche auf diesem Lager 35 angebracht sind, unabhängig von der Bewegung der Welle 29 zu rotieren.

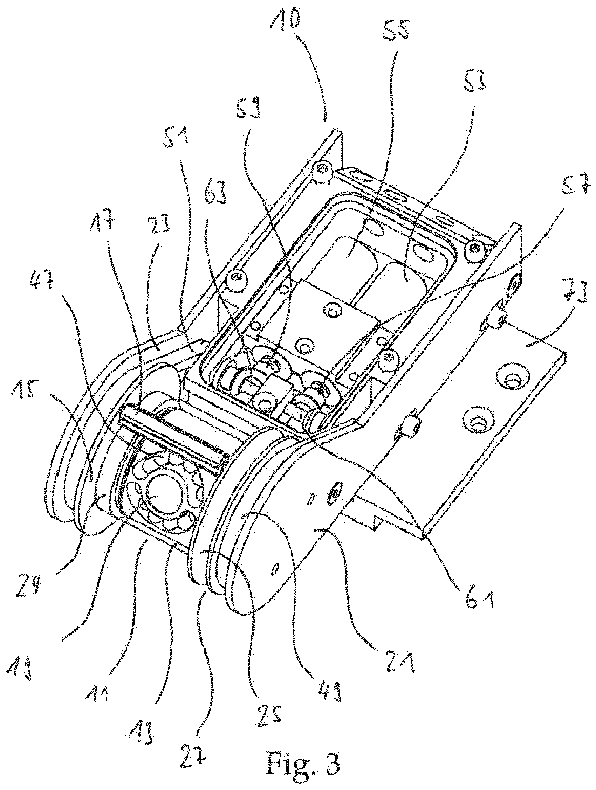

In Figur 3 ist die gesamte Kameraeinheit 10 nochmals in ihrer Gesamtheit dargestellt. Die Kamera 19 ist leicht nach oben gerichtet. Dadurch werden die Leuchten 47, welche um die Linse der Kamera platziert sind, ersichtlich. Diese sind in die Kamera 19 fest eingebaut und richten ihr Licht stets in die Richtung, in die die Linse der Kamera gerichtet ist.

Das Antriebsgehäuse 20 ist mit einer transparenten Aussenwand dargestellt. Dies ermöglicht die Darstellung der Komponenten, welche in diesem Bauteil angeordnet sind. Die grössten Komponenten darin sind die Elektromotoren 53, 55, welche den Antrieb für die Drehbewegung der Kamera 19 und des Wischers 17 erzeugen. Die Elektromotoren 53, 55 weisen einen zylindrischen Aufbau auf, wobei die Länge eines Elektromotors ein Vielfaches seines Durchmessers misst. Die Elektromotoren 53, 55 sind so ausgerichtet, dass ihre Zylinderachse parallel zur Längsrichtung der Kameraeinheit 10 ist.

Die Verbindung von den Elektromotoren 53,55 zum drehbaren Bauteil mit der Kamera erfolgt über Kettenantriebe. Die Ketten 49,51 greifen zum einen in die Zahnräder 37,43 und zum anderen in die Ritzel (hier nicht gezeigt) am Antriebsbauteil ein. Damit ermöglichen die Ketten 49,51 die Übertragung der Antriebsbewegung der Elektromotoren 53,55 auf die Drehbewegung der Kamera 19 bzw. des Wischers 17. Die Ketten 49,51 sind parallel zueinander angeordnet und befinden sich auf gegenüberliegenden Seiten der Kamera 19.

Die Elektromotoren 53,55 weisen je eine Antriebswelle 57,59 auf. Diese sind jeweils in Richtung der Zylinderachse des Elektromotors 53,55 angeordnet. Die Antriebswelle 57,59 umfasst an ihrem freien Ende ein Kegelrad. Das Kegelrad einer Antriebswelle 57,59 ist mit einem Kegelrad einer Übertragungswelle 61,63 formschlüssig verbunden. Daraus geht hervor, dass die Übertragungswellen 61,63 senkrecht zu den Antriebswellen 57,59 gerichtet sind. Somit sind die Übertragungswellen 61,63 parallel zur Welle 31 angeordnet, welche die Drehbewegung des zylindrischen Gehäuses 11 verursacht.

In Figur 4 ist ein horizontaler Querschnitt durch das Antriebsgehäuse 20 gezeigt. Das Antriebsgehäuse 20 weist zwei seitliche Öffnungen auf, welche auf beiden Längsseiten zueinander gegenüberliegend angeordnet sind. Dabei handelt es sich um Bohrungen, in welchen jeweils ein Lager angebracht ist. Durch diese Lager und somit auch durch die Bohrungen wiederum ist die Übertragungswelle 61,63 geführt. Die Übertragungswelle 61,63 reicht von der Mitte bis kurz ausserhalb des Antriebsbauteils. Das eine Ende der Übertragungswelle 61,63 kommt in der Mitte des Antriebbauteils zu liegen und wird von einem dort angebrachten Lager aufgenommen. Das jeweils andere Ende der Übertragungswelle 61,63 ragt aus dem Antriebsgehäuse 20 heraus. An jenem aus dem Bauteil ragenden Ende der Übertragungswelle ist jeweils ein Ritzel 65,67 angeordnet. Das Ende der Übertragungswelle weist mit dem Ritzel 65,67 einen flächenbündigen Abschluss auf. Sowohl das Ritzel 65,67 als auch das Kegelrad auf der Übertragungswelle sind fest an der Übertragungswelle 61,63 angebracht. Dadurch wird die Drehbewegung der Antriebswelle 57,59 über die Übertragungswelle 61,63 auf das Ritzel 65,67 übertragen. Das Vorhandensein von zwei Elektromotoren 53,55 mit zwei voneinander unabhängigen Übertragungen ermöglicht die separate Steuerung der Drehbewegungen der Kamera 19 und des Wischers 17.

Auf den beiden oberen Längskanten des Antriebsgehäuses 20 sind, wie in Figur 5 gezeigt, zwei Profilelemente 69 angebracht. Die Profile umfassen ein H-Profil, wobei die eine Fläche des H-Profils auf der Oberseite des Gehäuses 20 zu liegen kommt. Das H-Profil wird so platziert, dass die Mitte des H-Profils genau oberhalb der Kante des Gehäuses liegt. Mit der horizontalen, oberen Fläche des H-Profils ergeben sich zwei U-förmige Bereiche entlang des H-Profils. Die zwei sich gegenüberliegenden U-förmigen Bereiche beider Profile dienen als Aufnahmebereich für die Führung des Kabels 71, welches von der Kerbe 25 in der Scheibe 27 auf die Oberseite der Kameraeinheit 11 geführt wird. Das Kabel 71 wird auf dem Antriebsgehäuse 20 derart platziert, dass es mit Hilfe einer Schleife in den Aufnahmebereich beider H-Profile ragt.

Unterhalb der Seitenbleche 21,23 und dem Antriebsgehäuse 20 ist eine weitere horizontale Platte 73 angeordnet, wobei die Platte 73 am Antriebsgehäuse 20 angebracht ist. Die Platte 73 ragt über die Seitenbleche 21,23 hinaus. An jedem über die Seitenbleche ragenden Bereich weist die Platte 73 vier Bohrungen auf, welche auf einer Linie in Längsrichtung der Kameraeinheit 10 angeordnet sind. Die Bohrungen dienen der Aufnahme von Schrauben, mit welchen die gesamte Kameraeinheit 10 an einem Werkzeug befestigt werden kann.

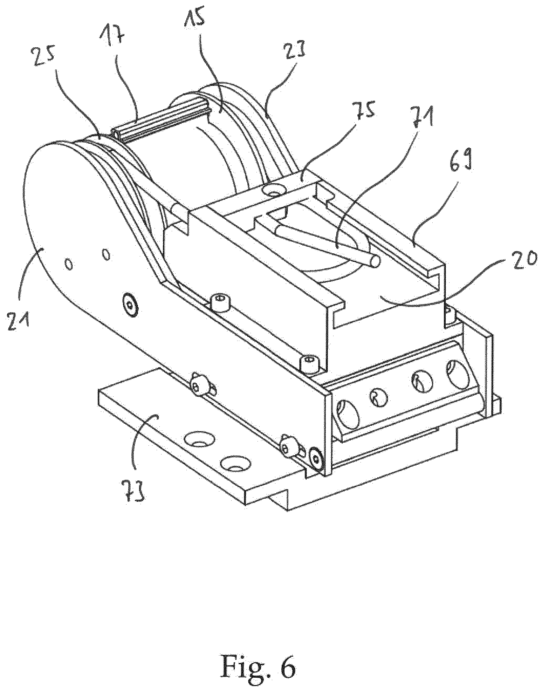

In Figur 6 ist eine weitere Ausführungsform der erfindungsgemässen Kameraeinheit gezeigt. Die Profile 69 auf dem Antriebsgehäuse 20 umfassen in dieser Ausführung keine H-Profile sondern lediglich U-Profile. Jedoch erfüllen die U-Profile die gleiche Aufgabe wie die U-förmigen Aufnahmebereiche der oben beschriebenen H-Profile. Auf der oberen zur Kamera am nächsten liegenden Kante des Antriebsgehäuses 20 ist eine Klemmplatte 75 angebracht. Diese kommt dadurch senkrecht zu den beiden oben beschriebenen Profilen 69 auf dem Antriebsgehäuse zu liegen.

In den Seitenblechen 21,23 sind sowohl Rundlöcher als auch Langlöcher angebracht. Diese dienen der Aufnahme von Schrauben für das Befestigen der Seitenbleche 21,23 am Antriebsgehäuse 20. Für das Ausbauen oder Auswechseln der Kamera 19 ist bereits das Abmontieren eines Seitenblechs 21,23 ausreichend. Anschliessend kann die auf der gleichen Seite wie das abmontierte Seitenblech 21,23 befindende Welle 29,31 mit den darauf angebrachten Bauteilen entfernt werden. Damit wird die Kamera 19 frei gelegt und kann ebenfalls entfernt oder allenfalls ausgetauscht werden.

Entgegen der Beschreibung des vorherigen Ausführungsbeispiels aus Figur 5 weist das Beispiel in Figur 6 eine Grundplatte 73 mit lediglich zwei Bohrungen auf einer Seite auf.

Während vorstehend spezifische Ausführungsformen beschrieben wurden, ist es offensichtlich, dass unterschiedliche Kombinationen der aufgezeigten Ausführungsmöglichkeiten angewendet werden können, insoweit sich die Ausführungsmöglichkeiten nicht gegenseitig ausschliessen.

### BEZUGSZEICHENLISTE:

- 10: Kameraeinheit
- 11: Zylindrisches Gehäuse
- 13: Fenster / Glaswand
- 14: Zylinderachse vom Gehäuse
- 15: Runde Scheibe / Support
- 16: Stangen im Wischer
- 17: Wischer
- 19: Kamera
- 20: Antriebsgehäuse
- 21: Erstes Seitenblech
- 23: Zweites Seitenblech
- 24: Erste Abdeckung
- 25: Zweite Abdeckung/ Scheibe
- 27: Kerbe
- 29: Erste Welle
- 31: Zweite Welle
- 33: Erstes Lager
- 34: Zweites Lager
- 35: Lager auf der Welle
- 37: Zahnrad
- 39: O-Ring
- 43: Erstes Zahnrad
- 45: Zusätzliche Scheibe
- 47: Kamera-Leuchten
- 49: Erste Kette
- 51: Zweite Kette
- 53: Erster Elektromotor
- 55: Zweiter Elektromotor
- 57: Erste Antriebswelle
- 59: Zweite Antriebswelle
- 61: Erste Übertragungswelle
- 63: Zweite Übertragungswelle
- 65: Erstes Ritzel
- 67: Zweites Ritzel
- 69: Profilelement
- 71: Kabel
- 73: Grundplatte
- 75: Klemmplatte

## Patentansprüche

1. Kameraeinheit (10) zum Beobachten von Sanierungsarbeiten in Kanalrohren mit
- einer Kamera (19),
- einem vorzugsweise flüssigkeitsdichten Gehäuse (11), in welchem die Kamera platziert ist,
- einem im Gehäuse (11) vorgesehenen Fenster (13), hinter welchem die Kamera angeordnet ist, und
- einem vor dem Fenster angeordneten Wischer (17) zum Abstreifen von Verschmutzungen, und
- einem ersten Antrieb für den Wischer (17),
**dadurch gekennzeichnet,**
**dass** der Wischer (17) unbeweglich an einem Support (15) angeordnet ist und der Support (15) durch den Antrieb hin und her bewegbar ist, und dass das Gehäuse (11) zylinderförmig ist und das Fenster (13) an der Mantelfläche angeordnet ist.

2. Kameraeinheit (10) nach Anspruch 1, **dadurch gekennzeichnet, dass** die Kameraeinheit (10) eine Wasserdüse aufweist, welche zur Kameraeinheit (10) geführtes Wasser auf das Fenster (13) spritzt.

3. Kameraeinheit (10) nach Anspruch 1 oder 2, **dadurch gekennzeichnet, dass** der Support (15) eine Scheibe umfasst und vorzugsweise der Wischer senkrecht zum Support angeordnet ist.

4. Kameraeinheit (10) nach einem der Ansprüche 1 bis 3, **dadurch gekennzeichnet, dass** das Fenster (13) das zylindrische Gehäuse (11) in dessen Umfangsrichtung umschliesst.

5. Kameraeinheit (10) nach einem der Ansprüche 1 bis 4, **dadurch gekennzeichnet, dass** die Scheibe (15) die gleiche Achse (14) wie das zylindrische Gehäuse (11) aufweist und drehbar gelagert ist.

6. Kameraeinheit (10) nach einem der vorangehenden Ansprüche, **dadurch gekennzeichnet, dass** der Support (15) sich in paralleler Richtung zu einer Kante des Fensters (13) bewegt und vorzugsweise von einem ersten Elektromotor (53) angetrieben ist.

7. Kameraeinheit (10) nach einem der vorangehenden Ansprüche, **dadurch gekennzeichnet, dass** der Wischer (17) mindestens von einer Kante bis zur gegenüberliegenden Kante des Fensters (13) ragt.

8. Kameraeinheit (10) nach einem der vorangehenden Ansprüche, **dadurch gekennzeichnet, dass** ein erstes Zahnrad (43) am Support (15) angebracht ist und dieses von einer ersten Kette (49) angetrieben wird, wobei vorzugsweise der erste Elektromotor (53) die erste Kette (49) über ein erstes Ritzel (65) antreibt.

9. Kameraeinheit (10) nach einem der vorangehenden Ansprüche, **dadurch gekennzeichnet, dass** ein zweiter Antrieb eine Drehbewegung der Kamera (19) erzeugt und vorzugsweise die Kamera (19) um die Zylinderachse (14) des Gehäuses (11) rotiert.

10. Kameraeinheit (10) nach Anspruch 9, **dadurch gekennzeichnet, dass** der Antrieb für die Drehbewegung der Kamera (19) einen zweiten Elektromotor (55), eine zweite Kette (51) und ein zweites Ritzel (67) umfasst.

11. Kameraeinheit (10) nach einem der Ansprüche 1 bis 10, **dadurch gekennzeichnet, dass** sich die Glaswand (13) und das zylindrische Gehäuse (11) zusammen mit der Kamera (19) mitrotieren und vorzugsweise das zylindrische Gehäuse die Glaswand (13), deren zwei Abdeckungen (24),(25) und die Kamera (19) umfasst.

12. Kameraeinheit (10) nach Anspruch 10 oder 11, **dadurch gekennzeichnet, dass** die erste und zweite Kette (49, 51)parallel zueinander angeordnet und vorzugsweise auf gegenüberliegenden Seiten des zylindrischen Gehäuses (11) angebracht sind.

13. Kameraeinheit (10) nach einem der vorangehenden Ansprüche, **dadurch gekennzeichnet, dass** die Kamera (19) eine oder mehrere in Richtung der Linse gerichtete Lichtquellen (47) aufweist.

14. Kameraeinheit (10) nach einem der vorangehenden Ansprüche, **dadurch gekennzeichnet, dass** am Support (15) mehr als ein Wischer (17), insbesondere zwei, drei oder vier Wischer, angebracht sind.

15. Kameraeinheit (10) nach einem der vorangehenden Ansprüche, **dadurch gekennzeichnet, dass** die Kameraeinheit (10) an einem Werkzeug angebracht ist.

## Claims

1. Camera unit (10) for observing rehabilitation work in sewer pipes with
- a camera (19),
- a preferably liquid-tight housing (11) in which the camera is placed,
- a window (13) provided in the housing (11), behind which the camera is arranged, and
- a wiper (17) arranged in front of the window for wiping off soiling, and
- a first drive for the wiper (17),
**characterized in that**
the wiper (17) is arranged immovably on a support (15) and the support (15) can be moved back and forth by the drive, and
**in that** the housing (11) is cylindrical and the window (13) is arranged on the lateral surface.

2. Camera unit (10) according to claim 1, **characterized in that** the camera unit (10) has a water nozzle which sprays water fed to the camera unit (10) onto the window (13).

3. Camera unit (10) according to claim 1 or 2, **characterized in that** the support (15) comprises a disk and preferably the wiper is arranged perpendicular to the support.

4. Camera unit (10) according to one of claims 1 to 3, **characterized in that** the window (13) encloses the cylindrical housing (11) in the circumferential direction thereof.

5. Camera unit (10) according to one of claims 1 to 4, **characterized in that** the disk (15) has the same axis (14) as the cylindrical housing (11) and is rotatably mounted.

6. Camera unit (10) according to one of the preceding claims, **characterized in that** the support (15) moves in a direction parallel to an edge of the window (13) and is preferably driven by a first electric motor (53).

7. Camera unit (10) according to one of the preceding claims, **characterized in that** the wiper (17) projects at least from one edge to the opposite edge of the window (13).

8. Camera unit (10) according to one of the preceding claims, **characterized in that** a first gear wheel (43) is attached to the support (15) and is driven by a first chain (49), the first electric motor (53) preferably driving the first chain (49) via a first pinion (65).

9. Camera unit (10) according to one of the preceding claims, **characterized in that** a second drive generates a rotary movement of the camera (19) and preferably rotates the camera (19) about the cylinder axis (14) of the housing (11).

10. Camera unit (10) according to claim 9, **characterized in that** the drive for the rotary movement of the camera (19) comprises a second electric motor (55), a second chain (51) and a second pinion (67).

11. Camera unit (10) according to one of claims 1 to 10, **characterized in that** the glass wall (13) and the cylindrical housing (11) rotate together with the camera (19) and preferably the cylindrical housing comprises the glass wall (13), its two covers (24), (25) and the camera (19).

12. Camera unit (10) according to claim 10 or 11, **characterized in that** the first and second chains (49, 51) are arranged parallel to each other and preferably mounted on opposite sides of the cylindrical housing (11).

13. Camera unit (10) according to one of the preceding claims, **characterized in that** the camera (19) has one or more light sources (47) directed in the direction of the lens.

14. Camera unit (10) according to one of the preceding claims, **characterized in that** more than one wiper (17), in particular two, three or four wipers, are attached to the support (15).

15. Camera unit (10) according to one of the preceding claims, **characterized in that** the camera unit (10) is attached to a tool.

## Revendications

1. Unité de caméra (10) pour l'observation des travaux de réhabilitation dans les canalisations, comprenant
- une caméra (19),
- un boîtier (11), de préférence étanche aux liquides, dans lequel est placée la caméra,
- une fenêtre (13) prévue dans le boîtier (11), derrière laquelle est disposée la caméra, et
- un essuie-glace (17) disposé devant la fenêtre pour essuyer les salissures, et
- un premier entraînement pour l'essuie-glace (17),
**caractérisé en ce que**
l'essuie-glace (17) est disposé de manière fixe sur un support (15) et le support (15) peut être déplacé en va-et-vient par l'entraînement, et
**en ce que** le boîtier (11) est cylindrique et que la fenêtre (13) est disposée sur la surface latérale.

2. Unité de caméra (10) selon la revendication 1, **caractérisée en ce que** l'unité de caméra (10) comprend une buse d'eau qui projette l'eau amenée à l'unité de caméra (10) sur la fenêtre (13).

3. Unité de caméra (10) selon la revendication 1 ou 2, **caractérisée en ce que** le support (15) comprend un disque et, de préférence, l'essuie-glace est disposé perpendiculairement au support.

4. Unité de caméra (10) selon l'une des revendications 1 à 3, **caractérisée en ce que** la fenêtre (13) entoure le boîtier cylindrique (11) dans la direction circonférentielle de celui-ci.

5. Unité de caméra (10) selon l'une des revendications 1 à 4, **caractérisée en ce que** le disque (15) a le même axe (14) que le boîtier cylindrique (11) et est montée rotatif.

6. Unité de caméra (10) selon l'une des revendications précédentes, **caractérisée en ce que** le support (15) se déplace dans une direction parallèle à un bord de la fenêtre (13) et est de préférence entraîné par un premier moteur électrique (53).

7. Unité de caméra (10) selon l'une des revendications précédentes, **caractérisée en ce que** l'essuie-glace (17) s'étend au moins depuis un bord jusqu'au bord opposé de la fenêtre (13).

8. Unité de caméra (10) selon l'une des revendications précédentes, **caractérisée en ce qu'**une première roue dentée (43) est montée sur le support (15) et est entraînée par une première chaîne (49), de préférence le premier moteur électrique (53) entraînant la première chaîne (49) par l'intermédiaire d'un premier pignon (65).

9. Unité de caméra (10) selon l'une des revendications précédentes, **caractérisée en ce qu'**un deuxième entraînement génère un mouvement de rotation de la caméra (19) et, de préférence, la caméra (19) tourne autour de l'axe de cylindre (14) du boîtier (11).

10. Unité de caméra (10) selon la revendication 9, **caractérisée en ce que** l'entraînement pour le mouvement de rotation de la caméra (19) comprend un deuxième moteur électrique (55), une deuxième chaîne (51) et un deuxième pignon (67).

11. Unité de caméra (10) selon l'une quelconque des revendications 1 à 10, **caractérisée en ce que** la paroi en verre (13) et le boîtier cylindrique (11) tournent conjointement avec la caméra (19) et, de préférence, le boîtier cylindrique comprend la paroi en verre (13), ses deux couvertures (24), (25) et la caméra (19).

12. Unité de caméra (10) selon la revendication 10 ou 11, **caractérisée en ce que** la première et la deuxième chaîne (49, 51) sont disposées parallèlement l'une à l'autre et sont de préférence montées sur des côtés opposés du boîtier cylindrique (11).

13. Unité de caméra (10) selon l'une des revendications précédentes, **caractérisée en ce que** la caméra (19) comprend une ou plusieurs sources de lumière (47) dirigées vers la lentille.

14. Unité de caméra (10) selon l'une des revendications précédentes, **caractérisée en ce que** plus d'un essuie-glace (17), en particulier deux, trois ou quatre essuie-glaces, sont montés sur le support (15).

15. Unité de caméra (10) selon l'une des revendications précédentes, **caractérisée en ce que** l'unité de caméra (10) est montée sur un outil.
